Europäisches Patentamt

European Patent Office

Office européen des brevets

(11) Publication number: **0 455 841 A1**

# EUROPEAN PATENT APPLICATION

(21) Application number: 90108487.1

(22) Date of filing: 05.05.90

(51) Int. Cl.5: **G01N 27/447**, C08F 20/56, C12Q 1/68

(43) Date of publication of application:
13.11.91 Bulletin 91/46

(84) Designated Contracting States:
CH DE FR GB IT LI NL SE

(71) Applicant: **Studiengesellschaft Kohle mbH**
**Kaiser-Wilhelm-Platz 1**
**W-4330 Mülheim/Ruhr(DE)**

(72) Inventor: **Schomburg, Gerhard, Prof.Dr.,**
**Dipl.-Chem. c/o**
**Studienges. Kohle mbH Kaiser-Wilhelm-Platz**
**1**
**W-4330 Mülheim a.d. Ruhr(DE)**
Inventor: **Lux, Jürgen Alfred, Dipl.-Chem. c/o**
**Studienges.**
**Kohle mbH Kaiser-Wilhelm-Platz 1**
**W-4330 Mülheim a.d. Ruhr(DE)**

(74) Representative: **von Kreisler, Alek,**
**Dipl.-Chem. et al**
**Patentanwälte Von Kreisler-Selting-Werner,**
**Deichmannhaus am Hauptbahnhof**
**W-5000 Köln 1(DE)**

(54) Method for the production of gel filled capillaries for capillary gel electrophoresis.

(57) The γ-radiation initiated formation of a polyacrylamide gel allows for the unsophisticated production of gel filled fused silica capillaries for CGE. The performance and stability of such gel filled capillaries is as good as that of those obtained by methods known in the art.

EP 0 455 841 A1

The invention is directed to the production of capillaries for gel electrophoretic (CGE) separations. In particular, narrow bore fused silica capillaries are filled with a solution of the common mixture of acrylamide/bisacrylamide in buffer. The acrylamid mixture is polymerized within the capillary by radicals generated by γ-radiation preferably originated from a $^{60}$Co-source.

Conventionally gel filled capillaries are produced by the method using radical initiators such as ammoniumpersulfate and TEMED (N,N',N',N'-tetramethyleneethylene diamine) as stabilizing agent. Such capillaries may possibly contain highly charged by-products and residual amine which should be removed before usage or storage.

Capillary gel electrophoresis as powerful separation technique especially for the rapid separation of oligonucleotides has been introduced by Karger et al., A.S. Cohen, D.R. Najarian, A. Paulus, A. Guttman, J.A. Smith, B.L. Karger, Proc. Natl. Acad. Sci, USA 85 (1988) 9660, EP-A 0 324 539 and US 4,865,706.

In order to avoid the disadvantage of the prior art with respect to the uniform distribution of the polymer and to avoid impurities due to the incorporation of radical initiators the present invention is directed to a process for the production of filled capillaries, characterized by filling of the microcapillary with a degased monomer solution to react in the bore of the capillary to form a hydrophyllic polymer-containing gel matrix by linear polymerization or polymerization and crosslinking of the polymerizable and/or functional reactive compound(s) by γ-radiation of the filled capillary.

In a preferred embodiment the invention is characterized in

a) filling of a fused silica capillary with a degased monomer solution of an acrylamide and/or bisacrylamide mixture in a known solution and buffer,

b) introduction of the solution by means of a standard filling procedure as used for the production of capillary columns in gas chromatography,

c) closure of both capillary ends and

d) linear polymerization or polymerization and crosslinking of the acrylamide and/or bisacrylamide mixture by γ-radiation of the filled capillary.

No other chemicals such as radical initiators and stabilizers have to be added for the optimal execution of the polymerization.

Such gel filled capillaries allow for CGE separations of for example oligonucleotides at high resolution and with good peak symmetry. According to the present experience the columns produced proved to be stable and maintained their performance of separation during series of measurements and storage.

Specific functional reactive compounds for the use as connecting materials between the surface of the capillary and the gel, in particular bifunctional reagents are disclosed in EP-A 0 324 539 but are limited to 3-methacryloxypropyltrimethoxysilane, -ethoxysilane, vinyltriacetoxysilane, vinyltri(ß-methoxy-ethoxy)silane, vinylchlorosilane and methylvinyldichlorosilane.

The crosslinking agents are selected from the group consisting of N,N'-methylenebisacrylamide, N,N'-(1,2-dihydroxyethylene)bisacrylamide, N,N'-dialkyltartratediamide, N,N'-cystaminebisacrylamide and N-acryloyltris(hydroxymethyl)aminomethane. Gels to be used are in principle known from EPA 0 324 539.

The invention is directed in particular to a procedure by which series of capillaries can easily and rapidly be produced. Untimely external or internal polymerization of the acrylamides is avoided in this procedure. Moreover, no other chemicals than the acrylamide and/or bisacrylamide mixture dissolved in buffer are needed to achieve well suited corsslinked polyacrylamide gels for CGE separations. The polymerization preferably is performed at room temperatur and no pressure has to be applied to the fused silica capillary. These moderate conditions of the polymerization reaction in combination with a stretched arrangement of the capillary in front of the radiation source (initiation of the polymerization by a dose gradient of the radiation) avoid the formation of bubbles in the gels within the capillary.

In one preferred embodiment the inventive process is characterized in generation of a detection window near the outlet of the fused silica capillary for in-column UV-detection by partial burn-off of a narrow section of the polyimide coating.

In a further embodiment the present invention is characterized in that the septa used for instance for the closures of both capillary ends are made by silicon rubber to prevent solvent evaporation during the subsequent polymerization step.

The preferred buffer according to the present invention is comprising tris base, boric acid and urea or other similar buffers.

Although the polymerization and crosslinking of the acrylamide and/or bisacrylamide by γ-radiation is not critical with respect to the specific dose, it is preferred that the γ-radiation originates from a $^{60}$Co-source at a dose from 20 krad to 400 krad and thus can easily be varied. The specific dose has proved of course to yield gels of the desired performance. The thus obtained gel filled capillary then can be installed in known or self-built instruments.

In particular, the gel filled capillaries which can be made for example of silica-based material, alumina, beryllia or Teflon [R] obtained according to the inventive process can be used for the separation of oligonucleotides.

## Example

In the first instance the experiments were performed by using a mixture of acrylamide and bisacrylamide purchased. The same results have been obtained with acrylamide mixtures which have been composed by applicant in variable ratios of the components. The acrylamide stock solution contained for example 19 g acrylamide, 1.0 g bisacrylamide and is diluted to 50 ml with triply distilled water. The components of the buffer were 1.211 g Tris base (Sigma), 1.546 g boric acid (Aldrich) and 42.04 g urea (Fluka) and were dissolved in triply distilled and degassed water and diluted to 100 ml. Samples of oligodeoxycytidine (24 - 36 mer Sigma) were dissolved in this buffer.

## Instrumentation

Capillary gel electrophoretic separations were performed in a recent version of equipment specially designed by applicant. The modular instrument consisted of a Spectra Physics UV-detector with a capillary holder equipped with a ball lens, as well as the usual grounding and sampling devices which also contain the electrodes. Into the latter the high voltage platinum electrode is integrated. For safety reasons all devices are machined advantageously from nonmetallic materials, in particular an acrylic ester glass, PTFE or polyethylene and the operator is protected against high voltage by an interlock system. A Vax 3100 work station operates a HCN 35-35000 high voltage power supply (FuG, Rosenheim, FRG) via an optically decoupled FuG Probus III interface and allows voltage control for electromigrative sample introduction as well as the adjustment of the actual separation voltage. Separations were performed in fused silica capillaries (100 $\mu$m i.d., 375 $\mu$m o.d., Polymicro Technologies) of 45 cm effective and 60 cm total length. For in-column detection a 1 mm section of the polyimide coating was removed to form a window at a distance of 45 cm from the injection end of the capillary by burning.

Sample:
0.1 mg/ml pd(C)$_{24-36}$
Capillary:
45 cm effective, 60 cm total length; 100 $\mu$m i.d. polyacrylamide gel filled (6 % T, 3 % C)
Buffer:
0.1 M Tris, 0.25 M borate buffer, 7 M urea; pH 7.5
Injection
: electrokinetic; 5000 V 6 s

Separation voltage:
300 V/cm
Detection:
UV/260 nm

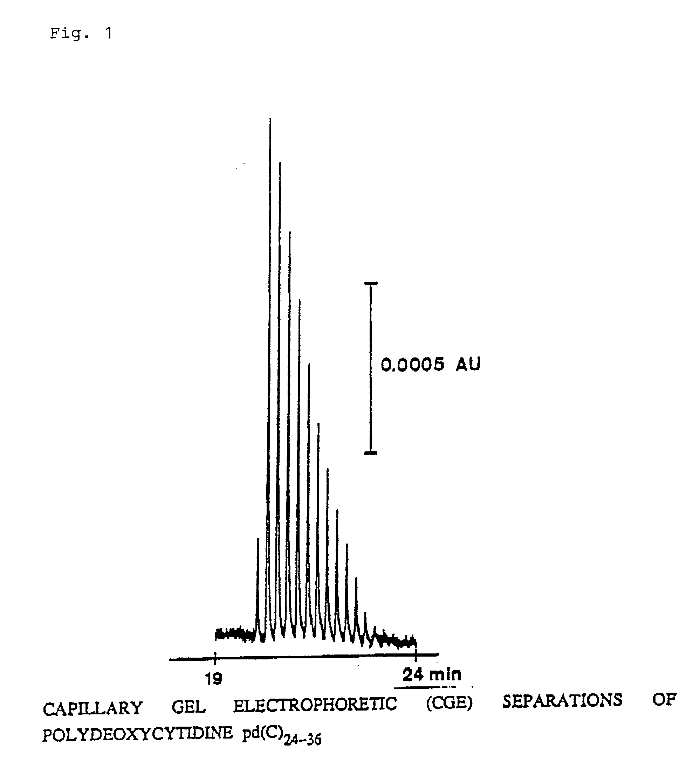

The electropherogram in Fig. 1 shows the separation of a mixture of 24 to 36 mer oligonucleotides. It should be noted that the resolution and the symmetry of the peaks proved to be excellent and as good as those previously published by A.S. Cohen, D.R. Najarian, A. Paulus, A. Guttman, J.A. Smith, B.L. Karger, Proc. Natl. Acad. Sci. USA **85** (1988) 9660 and A. Guttman, A. Paulus, A.S. Cohen, N. Grinberg, B.L. Karger, J. Chromatography **448** (1988) 41.

The resolution and the peak symmetries obtained with gel capillaries which were produced by the common procedures using ammonium persulfate and TEMED (N,N,N',N'-tetramethyleneethylene diamine) may more often be deterioriated during storage, according to the experience so far. The influence of the parameters of the formation of the gel such as the inclusion of a predecessing step of wall coating of fused silica capillaries on the performance of gel capillaries are being investigated at present.

## Claims

1.  Process for the production of a gel filled capillary for capillary gel electrophoresis characterized by filling of the microcapillary with a degased monomer solution to react in the bore of the capillary to form a hydrophyllic polymer-containing gel matrix by linear polymerization or polymerization and crosslinking of the polymerizable and/or functional reactive compound(s) by $\gamma$-radiation of the filled capillary.

2.  Process according to claim 1, characterized by
    a) filling of a fused silica capillary with a degased monomer solution of an acrylamide and/or bisacrylamide mixture in a known solution and buffer,
    b) introduction of the solution by means of a standard filling procedure as used for the production of capillary columns in gas chromatography,
    c) closure of both capillary ends and
    d) linar polymerization or polymerization and crosslinking of the acrylamide and/or bisacrylamide mixture by $\gamma$-radiation of the filled capillary.

3.  Process according to claim 1 characterized in generation of a detection window near the outlet of a fused silica capillary for in-column UV-detection by partial burn-off of a narrow section of the polyimide coating.

4. Process according to claims 2 or 3 characterized in that the buffer is comprising Tris-base,
   boric acid and urea or other similar buffers.

5. Process according to one of claims 1 to 4
   characterized in that the dosage originating
   from a $^{60}$Co-source is varied from 20 krad to
   400 krad.

6. Process according to claims 1 to 5 chracterized in that a crosslinking agent present in
   the degased monomer solution is present and
   selected from the group consisting of N,N'-
   methylenebisacrylamide, N,N'-(1,2-dihydrox-
   yethylene)bisacrylamide, N,N'-dialkyltar-
   tratediamide, N,N'-cystaminebisacrylamide and
   N-acryloyltris(hydroxymethyl)aminomethane.

7. Gel filled capillary for capillary gel electrophoresis obtained according to the process
   as claimed in claims 1 to 6.

8. Use of the gel filled capillary for capillary gel
   electrophoresis, in particular microcapillary gel
   electrophoresis.

9. Use of the capillary according to claim 8 for
   the separation of oligonucleotides.

Fig. 1

0.0005 AU

19                    24 min

CAPILLARY   GEL   ELECTROPHORETIC   (CGE)   SEPARATIONS   OF
POLYDEOXYCYTIDINE pd(C)$_{24-36}$

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| D,Y | EP-A-0 324 539 (NORTHEASTERN UNIV.) <br> * Abstract; figure 1; claims 1,5,6,9,10,19,29; page 2, lines 8-10; page 5, lines 25-37; page 6, line 55 - page 7, line 56; page 9, line 36 - page 11, line 16 * | 1-3,6-9 | G 01 N 27/447 <br> C 08 F 20/56 <br> C 12 Q 1/68 |
| A | | 4 | |
| Y | EP-A-0 159 694 (E.I. DU PONT DE NEMOURS) <br> * Abstract; claims 1,2,4,5,13,19-21,23; page 4, line 26 - page 5, line 2; page 8, lines 1-19; page 13, lines 22-30; page 20, line 31 - page 21, line 10; page 22, lines 1-5; page 25, lines 1-4 * | 1-3,6-9 | |
| A | | 4,5 | |
| A | EP-A-0 318 273 (NORTHEASTERN UNIV.) <br> * Abstract; column 5, line 41 - column 6, line 47; column 7, lines 26-53; figure 2 * | 1,3,7-9 | TECHNICAL FIELDS SEARCHED (Int. Cl.5) |
| D,A | JOURNAL OF CHROMATOGRAPHY, vol. 448, 1988, pages 41-53, Amsterdam, NL; A. GUTTMAN et al.: "Use of complexing agents for selective separation in high-performance capillary electrophoresis" <br> * Summary; page 45, last paragraph; figure 2 * | 1,3,4,7 -9 | G 01 N <br> B 01 D |

The present search report has been drawn up for all claims

| Place of search | Date of completion of the search | Examiner |
|---|---|---|
| THE HAGUE | 24-09-1990 | HOORNAERT P.G.R.J. |